## Europäisches Patentamt
## European Patent Office
## Office européen des brevets

(11) Numéro de publication: **0 034 547 B1**

(12) **FASCICULE DE BREVET EUROPEEN**

(45) Date de publication du fascicule du brevet:
25.01.84

(21) Numéro de dépôt: **81400277.0**

(22) Date de dépôt: **20.02.81**

(51) Int. Cl.³: **H 02 J 7/34,** H 02 J 7/10, H 02 H 7/18

(54) **Dispositif pour contrôler le fonctionnement d'une installation à panneau solaire.**

(30) Priorité: **22.02.80 FR 8003900**

(43) Date de publication de la demande:
**26.08.81 Bulletin 81/34**

(45) Mention de la délivrance du brevet:
**25.01.84 Bulletin 84/4**

(84) Etats contractants désignés:
**DE GB IT NL**

(56) Documents cités:
**FR - A - 2 041 576
FR - A - 2 408 237
US - A - 3 708 738**

**ELEKTROTECHNIK, vol. 59, no. 21, novembre 1977
Würzburg DE H.K. KOTHE: "Solargeneratoren stellen hohe Anforderungen", pages 16-18, 23,24 et 26
THE RADIO AND ELECTRONIC ENGINEER, vol. 35, no. 3, Mars 1968, Londres GB F.C. TREBLE et al.: "The Ariel III Power System", pages 135-141
ELEKTOR, vol. 5, no. 7/8, juillet/août 1979 Canterbury GB H.HEERE: "Automatic Battery Charger", page 72**

(73) Titulaire: **MOTEURS LEROY-SOMER Société dite:, Boulevard Marcellin Leroy, F-16000 Angouleme (FR)**

(72) Inventeur: **Lecoeuche, Jacques Résidence Fromonger APPT. no 1, 3ème étage Rue Lautrette, F-1600 Angoulême Cedex (FR)**

(74) Mandataire: **Bouju, André, 38 Avenue de la Grande Armée, F-75017 Paris (FR)**

Dispositif pour contrôler le fonctionnement d'une installation à panneau solaire

La présente invention concerne un dispositif pour contrôler le fonctionnement d'une installation de production d'énergie à partir d'au moins un panneau solaire, cette installation comprenant au moins un acculumateur, par exemple au plomb, alimenté par au moins un panneau solaire à cellules photovoltaïques.

Les installations auxquelles s'applique la présente invention comprennent en général un panneau solaire qui charge des accumulateurs qui alimentent un ou plusieurs appareils tels que des balises, émetteurs radio, installations d'éclairage, désignés plus loin par utilisation. Ces installations sont le plus souvent établies en des lieux bien ensoleillés mais peu habités et peu équipés, tels qu'on les rencontre en Afrique notamment.

Les dispositifs visés par l'invention ont pour rôle de contrôler le régime de charge du ou des accumulateurs par le panneau solaire, ou de décharge des accumulateurs dans l'utilisation.

En effet, les installations de production d'électricité à partir de panneaux solaires doivent fonctionner sous des conditions techniques rigoureuses. C'est ainsi que les panneaux de cellules photovoltaïques ne peuvent sans dommages sérieux être mis en circuit ouvert, ou au contraire en circuit fermé sur une résistance trop faible. Par ailleurs, il faut maintenir les accumulateurs dans un intervalle de tensions bien déterminé, par exemple entre 1,7 et 2,35 V par élément dans le cas des accumulateurs au plomb. A défaut, la durée de vie des accumulateurs est réduite, et leur réserve d'énergie possible amoindrie.

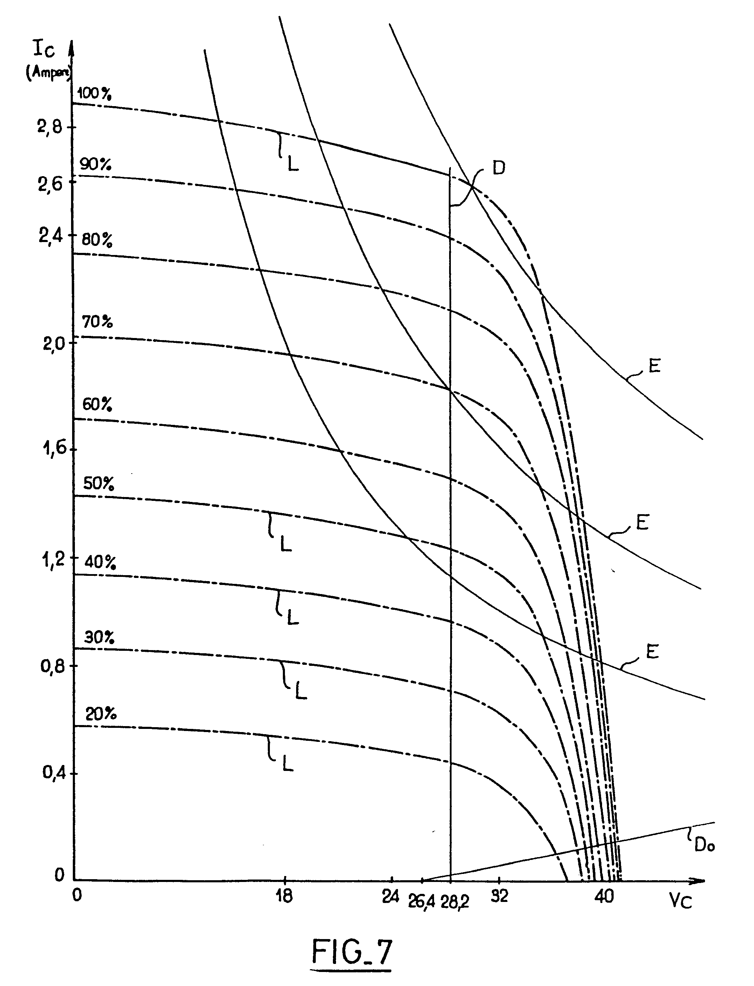

On sait, d'après la fig. 6 du document «Elektrotechnik», vol. 59, N° 21, novembre 1977, pp. 16-26, monter la ligne émetteur-collecteur d'un transistor de puissance en série avec une résistance dissipatrice entre les bornes communes du panneau et de l'accumulateur, la base du transistor étant alimentée en fonction de la tension aux bornes de l'accumulateur.

Ainsi, si la tension aux bornes de l'accumulateur atteint un niveau dangereux, le transistor est mis en service, ce qui établit entre les bornes du panneau une résistance variable dissipant la puissance excédentaire produite par le panneau solaire.

Cette disposition a de graves inconvénients. En effet, en période de fort ensoleillement et en l'absence de consommation, la puissance à dissiper est considérable, ce qui pose de graves problèmes d'évacuation de la chaleur et/ou de résistance des divers composants à la chaleur. En outre, le transistor du shunt est un organe de puissance posant à priori des problèmes de fiabilité. Or, les risques de panne sont rédhibitoires sur les appareils considérés, généralement installés en des lieux où les coûts et délais de réparation sont très importants. En outre, une déficience du contôleur risque d'endommager les accumulateurs et surtout les coûteuses et délicates cellules photovoltaïques.

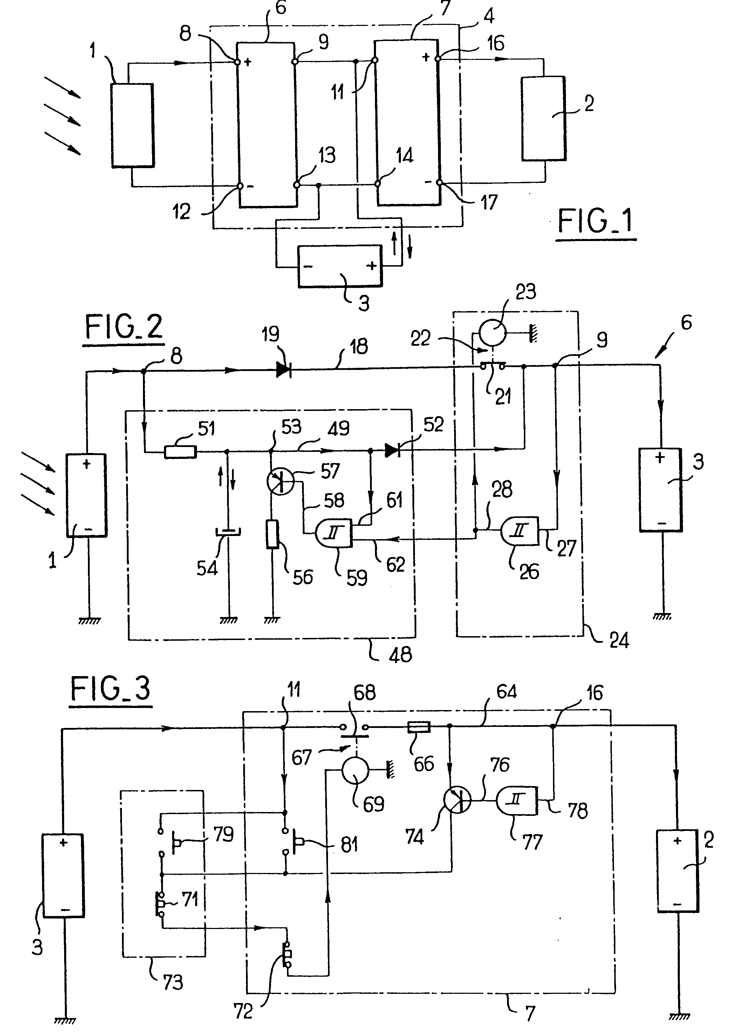

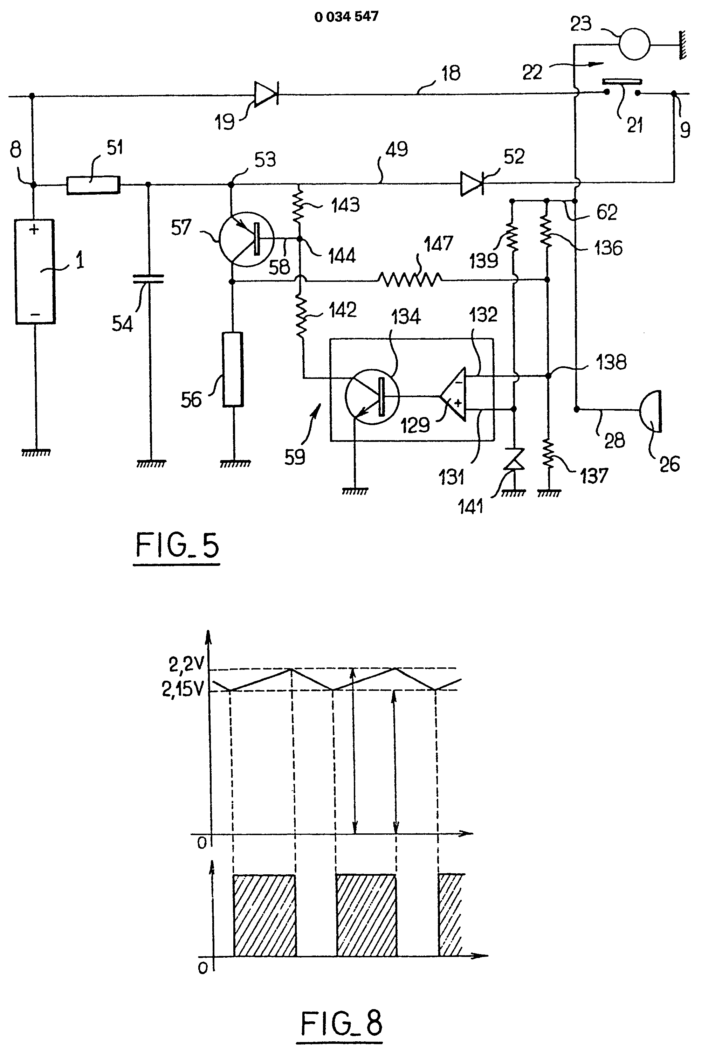

On sait également, d'après les fig. 3 et 5 du même document «Elektrotechnik», de même que d'après le Fr-A N° 2041576 et d'après le document «The Radio and Electronic Engineer», vol. 35, N° 3, mars 1968, pp. 135-141, limiter le courant de charge en insérant une résistance électrique en série entre la source électrique et la batterie. Mais cela ne protège pas les accumulateurs, car rien n'empêche ceux-ci d'atteindre, au bout d'un certain temps, une tension de charge prohibitive.

Dans le cadre de tous les documents antérieurs analysés ci-dessus, le seul moyen d'éviter les inconvénients relevés serait de faire en sorte que les tensions dangereuses de l'accumulateur soient quasiment en dehors de la gamme des tensions que peut fournir le panneau solaire. Mais cela serait très dangereux avec une simple limitation en courant, car le panneau solaire serait alors dans certains cas en circuit ouvert, ce qui risque de l'endommager. D'autre part, et dans tous les cas, cela conduirait à choisir un accumulateur de taille excessive dont la capacité de charge n'est que très partiellement exploitée. On sait en effet que, dans le cas très fréquent des accumulateurs au plomb, la charge possible peut varier du simple au double pour une faible différence de tension, cette stabilité de la tension en fonction de la charge étant justement un avantage recherché pour l'alimentation de bien des appareils.

Le but de l'invention est ainsi de remédier à ces inconvénients en proposant un dispositif du genre énoncé en introduction, dans lequel les accumulateurs peuvent être utilisés complètement et sans risque pour le panneau.

L'invention vise ainsi un dispositif pour contrôler le fonctionnement d'une installation de production d'énergie électrique à partir d'au moins un panneau solaire à cellules photovoltaïques, ce dispositif comprenant un contrôleur de charge monté entre une borne de branchement pour le panneau solaire et une borne de branchement pour l'accumulateur, le contrôleur de charge comprenant un circuit de charge sous tension réglée, ce circuit comprenant une branche de circulation du courant de charge et des moyens régulateurs de la tension aux bornes de l'accumulateur, ces moyens assurant en un point de la branche précitée une tension sensiblement constante relativement à l'autre borne de l'accumulateur.

Suivant l'invention, le dispositif est caractérisé en ce que le circuit de charge sous tension réglée comprend une résistance insérée dans la branche précitée entre le générateur solaire et le point précité de cette branche, et en ce que le dispositif comprend en outre un circuit de charge directe qui shunte la branche précitée du circuit de charge sous tension réglée, et un commutateur de régime pour mettre en service le circuit de charge sous tension directe ou le circuit de charge sous tension réglée en fonction de la tension aux bornes de l'accumulateur.

En régime de charge directe, le panneau solaire peut fournir sa pleine puissance sous une tension qui avoisine la tension maximale admissible pour l'accumulateur. Si celui-ci atteint un seuil de tension considéré comme dangereux, le commutateur de régime débranche le circuit de charge directe et met en service le circuit de charge sous tension réglée. Dans ce cas, la tension aux bornes de l'accumulateur est maintenue à un certain niveau choisi à volonté par le constructeur. Mais ce niveau de tension n'est pas imposé au panneau solaire. Du fait de la résistance montée en série dans le circuit de charge sous tension réglée, le panneau fonctionne au contraire sous une tension bien supérieure pour laquelle, compte tenu de ses caractéristiques tension/intensité, il ne fournit plus qu'une faible puissance. Ainsi, l'excédent de puissance est lui-même faible et il se dissipe dans la résistance en série ainsi que dans le régulateur de tension, sans que cela pose de graves problèmes d'échauffement et sans que le régulateur nécessite de composants de puissance.

D'autres particularités et avantages de l'invention ressortiront encore de la description qui va suivre.

Aux dessins annexés, donnés à titre d'exemples non limitatifs:

— la fig. 1 est une vue schématique d'une installation de production d'électricité par panneau solaire munie d'un dispositif de contrôle conforme à l'invention;

— la fig. 2 est un schéma du contrôleur de charge du dispositif de contrôle de la fig. 1;

— la fig. 3 est un schéma du contrôleur de décharge du dispositif de contrôle de la fig. 1;

— la fig. 4 est un schéma plus détaillé du premier système à seuil et hystérésis du contrôleur de charge de la fig. 2;

— la fig. 5 est un schéma plus détaillé du second système à seuil et hystérésis du contrôleur de charge de la fig. 2;

— la fig. 6 est un schéma plus détaillé du système à seuil du contrôleur de décharge de la fig. 3;

— la fig. 7 est un graphique sur lequel figurent les courbes caractéristiques des cellules photovoltaïques et les droites de fonctionnement de ces cellules avec un contrôleur de charge connu et avec le contrôleur de charge conforme à l'invention, et

— la fig. 8 est un graphique qui visualise le fonctionnement du régulateur de tension du contrôleur de charge.

L'installation de production d'électricité à partir d'énergie solaire représentée à la fig. 1, qui comprend un panneau solaire 1 à cellules photovoltaïques, est reliée à une utilisation 2 qui peut être une installation d'éclairage ou de radio-émission.

L'installation comprend encore un accumulateur 3, comprenant douze éléments au plomb, destiné à emmagasiner l'énergie fournie en excès par le panneau solaire 1 ou à restituer de l'énergie à l'utilisation 2 quand le panneau solaire ne suffit pas à alimenter celle-ci.

Le panneau solaire 1, l'accumulateur 3 et l'utilisation 2 sont reliés par un dispositif de contrôle 4 qui comprend un contrôleur de charge 6 et un contrôleur de décharge 7 de l'accumulateur 3.

Le contrôleur de charge 6 comporte une borne 8 de branchement au panneau solaire 1, une borne 9 destinée au branchement de l'accumulateur 3 et reliée à une borne 11 du contrôleur de décharge 7, et deux bornes 12, 13 pour relier la masse du panneau solaire 1 à celle de l'accumulateur 3 et à une borne 14 de mise à la masse du contrôleur 7.

Ce dernier comporte en outre une borne 16 de branchement de l'utilisation 2 et une borne 17 pour relier la masse de l'utilisation 2 à celle de l'installation de production d'électricité.

Comme le montre la fig. 2, les bornes 8 et 9 du contrôleur de charge 6 sont reliées par un conducteur 18 sur lequel sont montés en série une diode 19, permettant le passage du courant du panneau 1 vers l'accumulateur 3, et le contact 21 d'un relais électromécanique 22 qui est fermé quand son bobinage 23 est au repos.

Le relais 22 fait partie d'un commutateur de régime 24 qui comprend, en outre, un premier système à seuil et hystérésis 26 dont l'entrée 27 est reliée à la borne 9 et dont la sortie 28 alimente le bobinage 23 du relais 22.

Le système 26 est capable de fournir sur sa sortie 28 un état 0 ou un état 1 selon la tension appliquée à l'entrée 27. Plus précisément, en partant de l'état 0 à la sortie 28, si la tension à l'entrée 27 dépasse un seuil haut, égal à 28,2 V dans l'exemple représenté, la sortie 28 passe à l'état 1; à partir de cet état, la tension à l'entrée 27 doit redescendre en dessous d'un seuil bas, égal à 21,6 V dans l'exemple représenté, pour que la tension à la sortie 28 revienne à l'état 0.

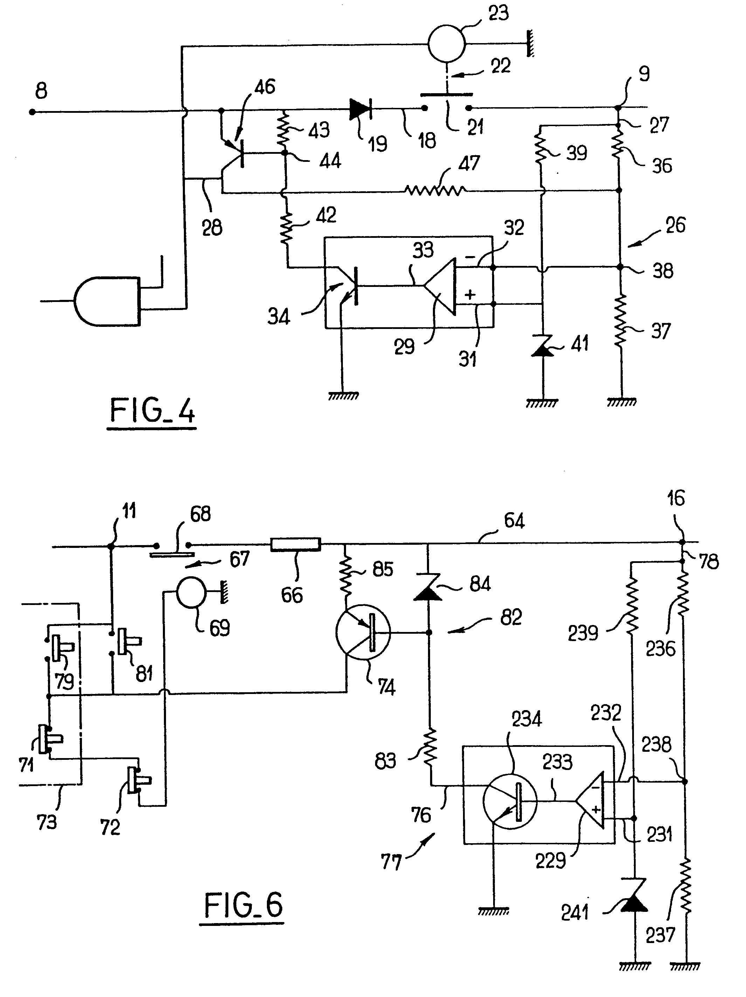

En référence à la fig. 4, le système 26 comprend un comparateur 29 qui comporte une entrée non inverseuse 31, une entrée inverseuse 32, et une sortie 33 reliée à la base d'un transistor 34 qui est bloqué si la tension à l'entrée 31 est supérieure à la tension à l'entrée 32, et saturé dans le cas contraire.

L'entrée 32 est branchée au point commun 38 de deux résistances 36, 37 montées en série entre l'entrée 27 et la masse.

L'entrée 31 est reliée à l'entrée 27 du système 26 par l'intermédiaire d'une résistance 39 et à la masse par l'intermédiaire d'une diode Zener 41, qui établit à cette entrée 31 une tension constante.

La ligne émetteur-collecteur du transistor 34 est montée entre la masse et deux résistances 42, 43 montées en série qui raccordent le transistor 34 à la borne 8.

Le point commun 44 des résistances 42, 43 est relié à la base d'un transistor 46 dont la ligne émetteur-collecteur relie la borne 8 à la sortie 28 du système 26, et, par l'intermédiaire d'une résistance 47, au point commun 38.

Le contact 21 du relais 22 est shunté par un circuit de charge sous tension limitée 48 comprenant une branche principale 49 qui relie les bornes 8 et 9 par l'intermédiaire d'une résistance 51 reliée directement à la borne 8 et d'une diode 52 qui permet le passage du courant du panneau 1 vers l'accumulateur 3 (fig. 2).

Le point commun 53 de la résistance 51 et de la diode 52 est relié à la masse par un condensateur 54 monté en parallèle avec une résistance 56 disposée en série avec la ligne émetteur-collecteur d'un transistor 57.

La base du transistor 57 est reliée à la sortie 58 d'un second système à seuil et hystérésis 59 dont l'entrée 61 est reliée au point commun 53.

Ce système à seuil et hystérésis 59, qui fonctionne de manière sensiblement analogue au premier système 26, présente en outre une seconde entrée 62 qui est reliée à la sortie 28 du premier système 26, et n'autorise l'état 1 à la sortie 58 que si cette entrée 62 est elle-même à l'état 1.

Les seuils bas et haut du système 59 sont avantageusement de 25,8 et 26,4 V, et sont ainsi respectivement plus élevés et plus faibles que les seuils bas et haut du système 26.

Comme le montre la fig. 5, la structure du second système à seuil et hystérésis 59 comporte des éléments analogues à ceux du premier système 26, et on a affecté à ces éléments une référence augmentée de 100 par rapport à ceux de la fig. 4.

Comme on l'a compris d'après le montage décrit en référence à la fig. 4, la tension à la sortie 28 du système 26, quand elle est à l'état 1, est sensiblement égale à la tension aux bornes de l'accumulateur 3. Ainsi, la tension à l'entrée 62 du second système 59 est voisine de la tension aux bornes de l'accumulateur 3 et il n'a ainsi pas été nécessaire de matérialiser l'entrée 61 figurée à des fins schématiques à la fig. 2. Simplement, les résistances 136 et 139 relient les entrées 131 et 132 à l'entrée 62. On a bien ainsi, quand l'entrée 62 est à l'état 0, la sortie 58 également à l'état 0 et, quand l'entrée 62 est à l'état 1, la sortie 58 à l'état 0 ou 1 selon la tension aux bornes de l'accumulateur 3.

Par ailleurs, la présence du transistor 57 permet de brancher la sortie 58 du système 59 directement sur le point 144 commun aux résistances 143 et 142, et la résistance 147 relie le point 138 au collecteur du transistor 57.

Comme le montre la fig. 3, les bornes 11 et 16 du contrôleur de décharge 7 sont reliées par un conducteur 64 sur lequel sont montés un fusible 66 et, entre ce dernier et la borne 11, le contact 68 d'un relais électromécanique 67 qui est ouvert quand son bobinage 69 n'est pas alimenté.

Le bobinage 69 est relié à la borne 16 par l'intermédiaire de la ligne collecteur-émetteur d'un transistor 74 dont la base est branchée sur la sortie 76 d'un système à seuil 77, dont la structure sera détaillée plus loin, qui est relié à la borne 16 par son entrée 78.

Entre le bobinage 69 et le transistor 74 sont montés en série deux boutons d'arrêt 71, 72 à contact fermé au repos, le bouton 71 faisant partie d'une commande à distance 73. Le bobinage 69 est également relié à la borne 11 par l'intermédiaire des boutons 71 et 72 et de deux boutons de mise en marche 79, 81 montés en parallèle, le bouton 79 faisant partie de la commande à distance 73.

Le système à seuil 77, qui est représenté en détail à la fig. 6, ne fournit à sa sortie 76 l'état 1 que si la tension à son entrée 78 est supérieure à un certain seuil de tension, égal à 21,6 V dans l'exemple représenté.

Le système à seuil 77 comprend des éléments analogues à ceux des systèmes à seuil et hystérésis 26, 59, et ces éléments analogues sont affectés de références correspondant à celles des systèmes 26 et 29, mais supérieures à 200.

Contrairement aux systèmes 26 et 59, la sortie 76 du système 77 est branchée directement au collecteur du transistor 234, et le système 77 ne comprend pas de liaison entre la sortie 76 et l'entrée 232 du comparateur, de sorte que le système 77 ne produit pas d'effet d'hystérésis.

Dans l'exemple représenté, la sortie 76 commande l'alimentation du bobinage 69 par l'intermédiaire d'un montage à courant constant 82. Suivant ce montage 82, la base du transistor 74 est reliée à la sortie 76 par l'intermédiaire d'une résistance 83, et à la borne 16 par une diode Zener 84. Par ailleurs, la ligne émetteur-collecteur du transistor 74 est reliée à la borne 16 par l'intermédiaire d'une résistance 85.

Le dispositif de contrôle décrit ci-dessus fonctionne de la façon suivante:

En supposant d'abord que le relais 22 est fermé, l'accumulateur 3 est alimenté directement par le conducteur 18.

La sortie 28 du système 26 étant à l'état 0, la sortie 58 du système 59 est également à l'état 0, de sorte que le transistor 57 est bloqué et qu'aucun courant ne traverse la résistance 56. Pendant un certain temps après la fermeture du relais 22, la résistance 51 est traversée par un certain courant jusqu'à ce que le condensateur 54 soit chargé.

En se référant à la fig. 4, la tension à l'entrée 32 est égale à la tension aux bornes de l'accumulateur 3 multipliée par le rapport de la valeur ohmique de la résistance 37 et de la somme des valeurs ohmiques des résistances 36 et 37.

Si la tension aux bornes de l'accumulateur 3 atteint 28,2 V, la tension à l'entrée 32 devient supérieure à la tension à l'entrée 31, le transistor 46 est débloqué et, le bobinage 23 étant ainsi excité, le contact 21 s'ouvre et le circuit 48 entre en service. En pratique, ce régime correspond souvent au cas où l'utilisation 2 est hors service, et où seul le courant d'entretien de l'accumulateur 3 est nécessaire.

En outre, l'entrée 32 est alors alimentée en parallèle par la résistance 36 et par la résistance 47, de sorte que la tension à l'entrée 32 est augmentée pour une même tension à la borne 9.

Ainsi, le système 26, qui a changé d'état quand la tension à la borne 9 a dépassé le seuil haut (28,2 V), ne pourra revenir à l'état 0 que si la tension à la borne 9 redescend en dessous du seuil bas (21,6 V).

L'entrée 132 (fig. 5) du comparateur 129 est à son tour soumise à une tension plus élevée que l'entrée 131, de sorte que le transistor 57 est débloqué et la résistance 56 est mise en service. Par ailleurs, la résistance 147 est elle aussi mise en service, de sorte que la tension sur l'entrée 132 est augmentée de façon à permettre l'effet d'hystérésis analogue à celui explicité ci-dessus pour le système 26.

Revenant à la fig. 2, le condensateur 54 se décharge à travers la résistance 56 ainsi mise en service jusqu'à ce que la tension à l'entrée 61 tombe en dessous du seuil bas (25,8 V), ce qui provoque le blocage du transistor 57. Le condensateur 54 se recharge alors à travers la résistance 51 jusqu'à ce que la tension à l'entrée 61 remonte au-dessus du seuil haut (26,4 V) du système 59, ce qui provoque un nouveau changement d'état de ce dernier et une nouvelle décharge du condensateur 54 dans la résistance 56, et ainsi de suite.

Ce fonctionnement est visualisé à la fig. 8 où l'on a mis en correspondance la tension collecteur-émetteur du transistor 57 (courbe en créneaux du bas) et la tension sur la branche 49 qui est la tension aux bornes de l'accumulateur 3 (courbe en dents de scie du haut), en fonction de la même échelle de temps portée en abscisses.

Comme le montre le graphique de la fig. 7, sur lequel la tension est portée en abscisses et le courant en ordonnées, le point de fonctionnement des cellules photovoltaïques se déplace, en fonction de la tension à leurs bornes, sur des lignes telles que L qui correspondent chacune à un éclairement déterminé, caractérisé par un pourcentage sur cette figure. On a par ailleurs représenté quelques équipuissances E, qui correspondent à une puissance d'autant plus élevée qu'elles sont éloignées de l'origine O des axes de coordonnées.

Dans les contrôleurs connus selon l'état de la technique mentionné plus haut, il est prévu de limiter la tension aux bornes de l'accumulateur en limitant simultanément la tension aux bornes des cellules à la même valeur, soit 28,2 V par exemple. Ainsi, le point de fonctionnement des cellules se déplace sur la droite D, qui coupe chaque ligne E en un des points de cette ligne où la puissance est la plus élevée. Il s'ensuit que la puissance à dissiper par effet Joule en cas de faible consommation dans l'utilisation est très importante, ce qui implique les inconvénients déjà énoncés plus haut.

Dans le régulateur 48 conforme à l'invention, la résistance 51, montée en série, limite le courant fourni par les cellules et augmente la tension à leurs bornes de sorte que le point de fonctionnement des cellules est situé le long de la droite Do qui coupe chaque ligne L en un point correspondant à une puissance très faible.

C'est ainsi que, selon une réalisation du contrôleur connu, on peut avoir une résistance de dissipation de 10 Ω qui, pour un éclairement de 100%, est traversée par un courant de 2,6 A. La tension aux bornes de la résistance est donc de 26 V et la puissance dissipée dans la résistance est de 26 V × 2,6 A = 67,6 W.

La ligne collecteur-émetteur du transistor de régulation, qui est montée en série avec la résistance aux bornes de l'accumulateur, est donc sous une tension de 28,2 − 26 = 2,2 V et dissipe une puissance de 2,2 V × 2,6 A = 5,72 W.

La puissance totale dissipée par effet Joule est donc de 67,6 + 5,72 = 73,32 W.

Si l'éclairement n'est que de 50%, le courant est de 1,22 A, de sorte que la puissance dissipée dans la résistance est de 14,88 W et celle dissipée dans le transistor de 19,52 W, soit au total 34,4 W. On peut montrer que cet éclairement correspond sensiblement à la puissance maximale dissipée dans le transistor du contrôleur connu.

Dans le contrôleur de charge conforme à l'invention, si la résistance 51 est de 100 Ω, la tension aux bornes des cellules photovoltaïques est de 41 V et le courant de 0,14 A.

On peut considérer que toute la puissance fournie est dissipée par effet Joule dans les résistances 51 et 56 et dans la ligne émetteur-collecteur du transistor 57, et cette puissance est égale à 41 V × 0,14 A = 5,74 W.

Le transistor 57, qui est utilisé en commutation et non en résistance variable comme dans l'état de la technique, ne dissipe aucune puissance quand il est bloqué, et présente, quand il est saturé, une tension émetteur-collecteur de 1 V qui correspond à une puissance dissipée de 1 V × 0,14 = 0,14 W.

On constate donc que, dans le controleur de charge conforme à l'invention, la puissance maximale dissipée par effet Joule est divisée par 12, tandis que la puissance maximale dissipée par effet Joule dans le transistor 57 est divisée par

$$\frac{19,52}{0,14}, = 139.$$

Comme le montre la fig. 3, quand l'utilisation 2 est hors service, le relais 67 est au repos en position ouverte. Pour mettre en marche l'utilisation, on appuie sur l'un des boutons 79 ou 81, de sorte que le bobinage 69 est excité par l'intermédiaire des boutons 71 et 72, et le contact 68 se ferme. Si la tension aux bornes de l'accumulateur 3 et, par suite, la tension à l'entrée 78 du système à seuil 77 est supérieure à 21,6 V, le transistor 74 est conducteur et, quand on relâche le bouton 79 ou 81 précité, le bobinage 69 reste excité par l'intermédiaire de la ligne émetteur-collecteur du transistor 74 et de la résistance 85 (fig. 6).

La résistance 85 est soumise à une tension constante égale à la tension imposée par la diode Zener 84 diminuée de la tension émetteur-base du transistor 74. Ainsi, grâce au montage 82, la résistance 85 est parcourue par un courant constant qui se retrouve pratiquement inchangé au bobinage 69. De préférence, ce courant est choisi aussi faible que possible de manière à diminuer la consommation du contrôleur de décharge pour son propre fonctionnement.

Si la tension aux bornes de l'accumulateur 3 descend au-dessous de 21,6 V, la sortie 76 passe à l'état 0 et le transistor 74 est bloqué, de sorte que, le bobinage 69 n'étant plus alimenté, le relais 67 s'ouvre et l'utilisation 2 n'est plus alimentée. Ainsi, l'accumulateur 3 ne risque pas d'être rapidement vidé de ses réserves d'énergie en cas, par exemple, d'absence d'ensoleillement.

Si on désire arrêter le fonctionnement de l'utilisation 2, il suffit d'appuyer momentanément sur l'un des boutons d'arrêt 71, 72, ce qui interrompt l'alimentation du bobinage 69 et ouvre le contact 68. La sortie 76 est alors à l'état 0, et le transistor 74 est ainsi bloqué, de sorte que, après relâchement du bouton 71 ou 72, le bobinage 69 n'est plus alimenté jusqu'à ce qu'on actionne à nouveau l'un des boutons 79 ou 81.

Certains avantages de l'ensemble de contrôle conforme à l'invention sont les suivants:

— robustesse des relais électromécaniques 22 et 67 commandés par des composants électroniques fonctionnant en commutation;

— faible dissipation d'énergie par effet Joule dans les résistances 51 et 56 et dans le transistor 57 en phase de régulation de tension;

— faible consommation d'énergie par l'ensemble de contrôle pour son fonctionnement propre;

— grâce au choix judicieux de la position repos des relais 22 et 67, minimisation de cette consommation aux périodes où l'énergie est la plus rare.

Bien entendu, l'invention n'est pas limitée à l'exemple décrit et représenté, et de nombreux aménagements peuvent être apportés à cet exemple sans sortir du cadre de l'invention.

C'est ainsi en particulier que le contrôleur de charge 6 ou le contrôleur de décharge 7 pourraient être utilisés séparément, bien qu'ils conduisent à des résultats particulièrement intéressants s'ils sont combinés en un dispositif de contrôle du genre décrit.

Par ailleurs, les systèmes à seuil et/ou à seuil et hystérésis pourraient être remplacés par tout montage conduisant à un résultat équivalent.

Il est possible d'utiliser le dispositif de contrôle décrit avec un accumulateur d'un type différent de l'accumulateur au plomb, ou avec un accumulateur au plomb comprenant plus ou moins de douze éléments. Dans tous les cas, les différents seuils de tension doivent être adaptés aux propriétés de l'accumulateur utilisé et au nombre d'éléments qu'il comporte.

**Revendications**

1. Dispositif pour contrôler le fonctionnement d'une installation de production d'énergie électrique à partir d'au moins un panneau solaire à cellules photovoltaïques (1), ce dispositif (4) comprenant un contrôleur de charge (6) monté entre une borne de branchement (8) pour le panneau solaire (1) et une borne de branchement (9) pour l'accumulateur (3), le contrôleur de charge (6) comprenant un circuit de charge sous tension réglée (48), ce circuit comprenant une branche (49) de circulation du courant de charge et des moyens régulateurs de la tension aux bornes de l'accumulateur, ces moyens assurant en un point de la branche précitée (49) une tension sensiblement constante relativement à l'autre borne de l'accumulateur (3), le dispositif étant caractérisé en ce que le circuit de charge sous tension réglée comprend une résistance (51) insérée dans la branche précitée entre le générateur solaire et le point précité (53) de cette branche, et en ce que le dispositif comprend en outre un circuit de charge directe (18) qui shunte la branche précitée (49) du circuit de charge sous tension réglée (48), et un commutateur de régime (24) pour mettre en service le circuit de charge sous tension directe (18) ou le circuit de charge sous tension réglée (48) en fonction de la tension aux bornes de l'accumulateur (3).

2. Dispositif conforme à la revendication 1, caractérisé en ce que le circuit de charge sous tension réglée (48) comprend un condensateur (54) et une résistance (56) montés en parallèle entre le point précité (53) du circuit de charge sous tension réglée et la masse de l'installation, des moyens (57, 59) étant prévus pour mettre en service cette résistance (56) quand la tension aux bornes de l'accumulateur (3) atteint un seuil haut et pour la débrancher quand cette tension atteint un seuil bas.

3. Dispositif conforme à la revendication 2, caractérisé en ce que ces moyens comprennent un transistor (57) dont la base est reliée à la sortie (58) d'un second système à seuil et hystérésis (59), l'entrée (61) de ce système (59) étant connectée à la branche (49) du circuit de charge sous tension réglée entre la résistance (51) insérée dans cette branche et l'accumulateur (3).

4. Dispositif conforme à la revendication 3, caractérisé en ce que le commutateur de régime (24) comprend un premier système à seuil et hystérésis (26) agencé pour commuter le régime en fonction de la tension aux bornes de l'accumulateur (3), ce système ayant un seuil haut et un seuil bas respectivement plus élevé et plus faible que le seuil haut et le seuil bas du second système à seuil et hystérésis (59).

5. Dispositif conforme à la revendication 4, caractérisé en ce que le second système à seuil et hystérésis (59) comprend une autre entrée (62), destinée à mettre la sortie (58) du système (59) à l'état 0 quand cette entrée (62) est elle-même à l'état 0, et reliée à la sortie (28) du premier système à seuil et hystérésis (26).

6. Dispositif conforme à l'une des revendications 1 à 5, caractérisé en ce qu'un contrôleur de décharge (7) est monté entre la borne (9) de branchement pour l'accumulateur (3) et une borne (16) de branchement pour l'utilisation (2).

7. Dispositif conforme à la revendication 6, caractérisé en ce que le contrôleur de décharge (7) comprend une branche principale (64) reliant les bornes de branchement (9, 16) à l'accumulateur (3) et à l'utilisation (2), cette branche (64) portant le contact (68) d'un relais (67) dont le bobinage (69) est alimenté par des moyens (76) sensibles à la tension dans la branche précitée (64), par l'intermédiaire d'un montage à courant constant (82).

8. Dispositif conforme à la revendication 7, caractérisé en ce que l'entrée (78) des moyens (76) sensibles à la tension de la branche principale (64) du contrôleur de décharge (7) est reliée à la borne de branchement (8) pour l'accumulateur (3) par l'intermédiaire du contact (68) du relais (67).

**Patentansprüche**

1. Vorrichtung zur Steuerung des Betriebs einer Anlage zur Erzeugung von elektrischer Energie mittels wenigstens eines mit Fotozellen versehenen Sonnenkollektors (1), wobei diese Vorrichtung (4) eine Ladesteuereinheit (6) enthält, die zwischen eine Anschlussklemme (8) für den Sonnenkollektor (1) und eine Anschlussklemme (9) für den Akkumulator (3) geschaltet ist, wobei die Ladesteuereinheit (6) eine Ladeschaltung (48) zum Aufladen mit stabilisierter Spannung umfasst, welche einen Ladestromzweig (49) und Mittel zum Stabilisieren der Spannung an den Anschlüssen des Akkumulators enthält, wobei diese Mittel an einem Punkt des vorgenannten Zweiges (49) eine im wesentlichen konstante Spannung in bezug auf den anderen Anschluss des Akkumulators (3) gewährleisten, wobei die Vorrichtung dadurch gekennzeichnet ist, dass die Ladeschaltung zum Aufladen mit stabilisierter Spannung einen Widerstand (51) umfasst, der in dem genannten Zweig zwischen den Sonnenkollektor und den vorgenannten Punkt (53) dieses Zweiges eingefügt ist, und dass die Vorrichtung ferner eine Direktladeschaltung (18) umfasst, welche den vorgenannten Zweig (49) der Ladeschaltung (48) zum Aufladen mit stabilisierter Spannung überbrückt, sowie einen Betriebszustandumschalter (24) aufweist, um in Abhängigkeit von der Spannung an den Anschlüssen des Akkumulators (3) die Ladeschaltung (18) zum Aufladen mit der direkten Spannung oder die Ladeschaltung (48) zum Aufladen mit stabilisierter Spannung in Betrieb zu nehmen.

2. Vorrichtung nach Anspruch 1, dadurch gekennzeichnet, dass die Ladeschaltung (48) zum Aufladen mit stabilisierter Spannung einen Kondensator (54) und einen Widerstand (56) umfasst, die parallel miteinander zwischen den vorgenannten Punkt (53) der Ladeschaltung zum Aufladen mit stabilisierter Spannung und die Masse der Anlage geschaltet sind, wobei Mittel (57, 59) vorgesehen sind, um diesen Widerstand (56) in Funktion zu bringen, wenn die Spannung an den Anschlüssen des Akkumulators (3) einen hohen Schwellwert erreicht, und um ihn abzuschalten, wenn diese Spannung einen niedrigen Schwellwert erreicht.

3. Vorrichtung nach Anspruch 2, dadurch gekennzeichnet, dass diese Mittel einen Transistor (57) umfassen, dessen Basis mit dem Ausgang (58) eines zweiten Systems (59) mit Schwellwert und Hysteresis verbunden ist, wobei der Eingang (61) dieses Systems (59) mit dem Zweig (49) der Ladeschaltung zum Aufladen mit stabilisierter Spannung zwischen dem in diesen Zweig eingefügten Widerstand (51) und dem Akkumulator (3) verbunden ist.

4. Vorrichtung nach Anspruch 3, dadurch gekennzeichnet, dass der Betriebszustandumschalter (24) ein erstes System (26) mit Schwellwert und Hysteresis umfasst, welches so ausgelegt ist, dass es den Betriebszustand in Abhängigkeit von der Spannung an den Anschlüssen des Akkumulators (3) umschaltet, wobei dieses System einen hohen Schwellwert und einen niedrigen Schwellwert aufweist, von denen der erste höher und der zweite niedriger ist als der hohe Schwellwert bzw. niedrige Schwellwert des zweiten Systems (59) mit Schwellwert und Hysteresis.

5. Vorrichtung nach Anspruch 4, dadurch gekennzeichnet, dass das zweite System (59) mit Schwellwert und Hysteresis einen weiteren Eingang (62) umfasst, der dazu bestimmt ist, den Ausgang (58) des Systems (59) in den Zustand 0 zu versetzen, wenn dieser Eingang (62) seinerseits im Zustand 0 ist, und der mit dem Ausgang (28) der ersten Systems (26) mit Schwellwert und Hysteresis verbunden ist.

6. Vorrichtung nach einem der Ansprüche 1 bis 5, dadurch gekennzeichnet, dass eine Entladesteuereinheit (7) zwischen die Anschlussklemme (9) für den Akkumulator (3) und eine Anschlussklemme (16) für die Nutzlast (2) geschaltet ist.

7. Vorrichtung nach Anspruch 6, dadurch gekennzeichnet, dass die Entladesteuereinheit (7) einen Hauptzweig (64) umfasst, welcher die Anschlussklemmen (9, 16) für den Akkumulator (3) und für die Nutzlast (2) verbindet, wobei dieser Zweig (64) den Kontakt (68) eines Relais (67) enthält, dessen Wicklung (69) über eine Konstantstromschaltung (82) durch Mittel (76) gespeist wird, die auf die Spannung in dem vorgenannten Zweig (64) ansprechen.

8. Vorrichtung nach Anspruch 7, dadurch gekennzeichnet, dass der Eingang (78) der auf die Spannung in dem Hauptzweig (64) der Entladesteuereinheit (7) ansprechenden Mittel (76) mit der Anschlussklemme (8) für den Akkumulator (3) über den Kontakt (68) des Relais (67) verbunden ist.

**Claims**

1. Device for controlling the operation of an installation for production of electric power from at least one solar panel comprising photovoltaic cells (1), this device (4) comprising a charge controller (6) mounted between a connection terminal (8) for the solar panel (1) and a connection terminal (9) for the accumulator (3), the charge controller (6) comprising a regulated voltage charge circuit (48), this circuit comprising a branch (49) for the flow of charging current and means for regulating the voltage at the terminals of the accumulator, these means being intended to produce at one point of the branch aforesaid (49) a voltage which is substantially constant relatively to the other terminal of the accumulator (3), the device being characterized in that the regulated voltage charge circuit comprises a resistor (51) inserted in the branch aforesaid between the solar generator and the aforesaid point (53) of this branch, and that the device further comprises a direct charge circuit (18) which is connected is shunt with the aforesaid branch (49) of the regulated voltage charge circuit (48), and an operating-mode switch (24) for putting into service either the direct voltage charge circuit (18) or the regulated voltage charge circuit (48) as a function of the voltage at the terminals of the accumulator (3).

2. Device in accordance with claim 1, characterized in that the regulated voltage charge circuit (48) comprises a capacitor (54) and a resistor (56) mounted in parallel between the aforementioned point (53) of the regulated voltage charge circuit and the ground of the installation, means (57, 59) being provided for putting this resistor (56) into service when the voltage at the terminals of the accumulator (3) attains a top threshold value and for disconnecting it when this voltage attains a bottom threshold value.

3. Device in accordance with claim 2, characterized in that these means comprise a transistor (57), the base of which is connected to the output (58) of a second threshold and hysteresis system (59), the input (61) of this system (59) being connected to the branch (49) of the regulated voltage charge circuit between the resistor (51) which is inserted in this branch and the accumulator (3).

4. Device in accordance with claim 3, characterized in that the operating-mode switch (24) comprises a first threshold and hysteresis system (26) which is adapted to switch the operating mode as a function of the voltage at the terminals of the accumulator (3), this system being provided with a top threshold and a bottom threshold respectively higher and lower than the top threshold and bottom threshold of the second threshold and hysteresis system (59).

5. Device in accordance with claim 4, characterized in that the second threshold and hysteresis system (59) comprises another input (62) which is intended to put the output (58) of the system (59) in state 0 when this input (62) is itself in state 0, and is connected to the output (28) of the first threshold and hysteresis system (26).

6. Device in accordance with one of claims 1 to 5, characterized in that a discharge controller (7) is mounted between the connection terminal (9) for the accumulator (3) and a connection terminal (16) for the utilization (2).

7. Device in accordance with claim 6, characterized in that the discharge controller (7) comprises a main branch (64) for connecting the connection terminals (9, 16) to the accumulator (3) and to the utilization (2), this branch (64) being intended to carry the contact (68) of a relay (67), the coil (69) of which is supplied by means (76) which are responsive to the voltage in the branch aforesaid (64) through the intermediary of a constant-current assembly (82).

8. Device in accordance with claim 7, characterized in that the input (78) of the means (76) which are responsive to the voltage of the main branch (64) of the discharge controller (7) is connected to the connection terminal (8) for the accumulator (3) through the intermediary of the contact (68) of the relay (67).

0 034 547

FIG_1

FIG_2

FIG_3

9

FIG_4

FIG_6

0 034 547

FIG_5

FIG_8

13

FIG. 7